# EUROPÄISCHE PATENTSCHRIFT

(11) **EP 3 164 247 B1**
(45) Veröffentlichungstag und Bekanntmachung des Hinweises auf die Patenterteilung: **22.11.2017**
(21) Anmeldenummer: 16712840.4
(22) Anmeldetag: 24.03.2016
(51) Int. Cl.: B25J 15/02, B23B 31/12

(54) **PASSIVE SCHMIERUNG DER GLEITFÜHRUNG EINER GREIFVORRICHTUNG**
PASSIVE LUBRICATION OF THE SLIDING GUIDE OF A GRIPPING DEVICE
LUBRIFICATION PASSIVE DE LA GLISSIÈRE D'UN DISPOSITIF DE PRÉHENSION

(30) Priorität: 27.03.2015 DE 102015205657
(43) Veröffentlichungstag der Anmeldung: 10.05.2017
(73) Patentinhaber: Schunk GmbH & Co. KG Spann- und Greiftechnik, 74348 Lauffen am Neckar (DE)
(72) Erfinder: WINKLER, Ralf, 74226 Nordheim (DE); WUETHERICH, Samuel, 74397 Pfaffenhofen (DE); SCHOLL, Rainer, 74336 Brackenheim/Hausen (DE)
(74) Vertreter: DREISS Patentanwälte PartG mbB
(86) Internationale Anmeldenummer: PCT/EP2016/056608
(87) Internationale Veröffentlichungsnummer: WO 2016/156232

(56) Entgegenhaltungen:
- EP-A1- 0 865 853
- DE-B3- 10 241 826
- DE-T2- 69 222 511

## Beschreibung

Die Erfindung betrifft eine Spann- oder Greifvorrichtung, mit wenigstens einer in einer Beckenführung verschiebbar geführten Backe, wobei die Backe beziehungsweise die Backenführung beidseits jeweils wenigstens einen sich in Verschieberichtung erstreckenden Führungssteg aufweist, und wobei die Backenführung beziehungsweise die Backe mit den Führungsstegen zusammenwirkende Führungsnuten aufweisen. Die Erfindung betrifft auch eine dazugehörige Backe sowie ein dazugehöriges Verfahren.

Bei den Spannvorrichtungen beispielsweise um Spannfutter, insbesondere einer Drehmaschine, oder Schraubstöcke handeln; bei den Greifvorrichtungen kann es sich insbesondere um Parallel- oder Zentrischgreifer handeln. Dementsprechend kann es sich bei den Backen um Greiferbacken oder Spannbacken handeln.

Derartige Greifvorrichtungen sind in vielfältiger Weise aus dem Stand der Technik vorbekannt. Beispielsweise ist aus der EP 1 263 554 B1 ein Parallelgreifer mit einem Gehäuse und zwei verstellbaren Greiferbacken, welche in dem Gehäuse in einer Backenführung verschieblich geführt sind, vorbekannt. Dabei weisen die Greiferbacken Führungsstege auf, die mit Führungsnuten in der Backenführung zusammenwirken.

Aus der EP 865 853 A ist eine Greifvorrichtung mit Merkmalen des Oberbegriffs des Anspruchs 1 bekannt.

Dabei hat sich herausgestellt, dass die mit diesen Greifvorrichtungen erzielbaren Greifkräfte sowie die Wiederholgenauigkeit des Greifens und auch der Verschleiß der Greifvorrichtung stark vom Schmierzustand der Kontaktbereiche, also der Bereiche, in denen die Führungsstege mit den Führungsnuten zusammenwirken, abhängen.

Es besteht folglich ein Bedürfnis nach einem möglichst gleichbleibenden Schmierzustand zwischen den sich relativ zueinander bewegenden Teilen der Greifvorrichtung. Weiterhin besteht ein Bedürfnis, dass eine derartige kontinuierliche Schmierung der Greifvorrichtung möglichst einfach erzielt werden kann.

Demgemäß ist es Aufgabe der Erfindung, Greifvorrichtungen der eingangs genannten Art derart weiterzubilden, dass auf möglichst einfache Art und Wiese eine möglichst gleichbleibende Schmierung zwischen der Greiferbacke und der Backenführung bereitgestellt werden kann.

Diese Aufgabe wird mit einer Spann- oder Greifvorrichtung mit den Merkmalen des Anspruchs 1 gelöst. Es ist folglich vorgesehen, dass wenigstens ein Führungssteg einen ersten Gleitabschnitt, einen zweiten Gleitabschnitt sowie einen zwischen den Gleitabschnitten liegenden Aussparungsabschnitt aufweist. Dabei weist der Aussparungsabschnitt eine sich in Verschieberichtung und dazu in Querrichtung erstreckende Aussparung zur Ausbildung eines Schmiermittelreservoirs auf. Die Aussparung umfasst einen ersten Abschnitt und einen zweiten Abschnitt, wobei die jeweiligen Abschnitte in Querrichtung von einem ersten freien Endseitenabschnitt und einem zweiten freien Endseitenabschnitt des Aussparungsabschnitts begrenzt werden, und wobei die jeweiligen freien Endseitenabschnitte mit der Verschieberichtung jeweils einen Winkel γ zwischen 0.01° und 10° einschließen. In der erfindungsgemäßen Spann- oder Greifvorrichtung ist unmittelbar in demjenigen Bereich, in dem die Backe mit der Backenführung zusammenwirkt, ein Schmiermittelreservoir vorgesehen, welches mit einem Schmiermittel befüllbar ist. Das Reservoir wird dabei einerseits von den Führungsstegen und andererseits von den Führungsnuten begrenzt und damit unmittelbar durch die Kontaktflächen der Backenführung und der Backen. Damit kann ein vergleichsweise gleichbleibender Schmierzustand der sich relativ zueinander bewegenden Teile der Spann- oder Greifvorrichtung bereitgestellt werden. Die erfindungsgemäße Spann- oder Greifvorrichtung zeichnet sich insbesondere dadurch aus, dass die jeweiligen freien Endseitenabschnitte mit der Verschieberichtung jeweils einen Winkel γ zwischen 0.01° und 10° einschließen, wodurch eine sich verjüngende Aussparung bereitgestellt werden kann, sodass ein sich verjüngender Schmierspalt ausgebildet wird. In diesem Winkelbereich kann durch die Bewegung der Backe in Verschieberichtung das Schmiermittel zwischen die Führungsstege und Führungsnuten gedrängt werden und damit schlussendlich eine verbesserte Schmierfilmbildung im Bereich der gesamten Kontaktflächen erzielt werden. Weiterhin besteht die Möglichkeit eine hydrodynamische Schmierung oder zumindest der Ansatz eines hydrodynamischen Schmierens bereitzustellen, was bedeutet, das Schmiermittel durch eine ausreichend schnelle Relativbewegung zwischen der Backe sowie der Backenführung derart zwischen die Kontaktflächen, also die Führungsstege sowie die korrespondierenden Führungsnuten gedrängt wird, dass diese voneinander abgehoben werden oder zumindest ansatzweise voneinander abgehoben werden.

Der erste Abschnitt sowie der zweite Abschnitt des Aussparungsabschnitts können dabei in Verschieberichtung keilartig, aber auch bogenförmig ausgebildet sein. Sollten die Abschnitte in Verschieberichtung eine nicht-lineare Kontur aufweisen, so kann mittels der bekannten Näherungsmethoden, beispielsweise der linearen Regression, eine Näherungsgerade zur Bestimmung des vom ersten freien Endabschnitt und zweiten freien Endabschnitt mit der Verschieberichtung eingeschlossenen Winkels γ verwendet werden.

Insgesamt kann damit eine Spann- oder Greifvorrichtung bereitgestellt werden, bei der eine kontinuierliche Schmierung der Kontaktflächen, also der Führungsstege sowie der Führungsnuten auf besonders einfache Art und Weise bereitgestellt werden kann.

Gemäß einer besonders vorteilhaften Ausgestaltung der Erfindung weisen die Führungsstege eine Stegbreite F auf, wobei sich die Stegbreite F vom Steggrund in Querrichtung bis zum freien Stegende erstreckt, und wobei die Tiefe T der Aussparung in Querrichtung kleiner oder gleich der Stegbreite F ist. Das freie Stegende ist dabei selbstverständlich das freie Ende des ersten Gleitabschnitts beziehungsweise des zweiten Gleitabschnitts, wobei die freien Endseiten der Gleitabschnitte parallel zur Verschieberichtung verlaufen.

Eine Herstellung derartiger Führungsstege ist auf besonders einfache Art und Weise möglich, beispielsweise durch Durchführung eines Schleifvorgangs, wobei die Kontur mittels einer Schleifscheibe eingebracht werden kann. Dabei müssen lediglich die Führungsstege und nicht die Basiskörper, von denen die Führungsstege in Querrichtung abstehen, bearbeitet werden. Denkbar ist auch eine Herstellung mittels eines Fräsvorgangs.

Vorteilhafterweise beträgt das Verhältnis der Stegbreite F zur Tiefe T der Aussparung in Querrichtung 10 bis 60, insbesondere 30 bis 50, weiter insbesondere 35 bis 45. Als besonders günstig hat sich zudem ein Verhältnis von 30 bis 60, weiter insbesondere 35 bis 55 herausgestellt.

Das Verhältnis der Länge K der Führungsstege zur Länge R des Aussparungsabschnitts in Verschieberichtung kann bei 1 bis 9, insbesondere 2 bis 7 liegen.

Gemäß einer weiteren Ausgestaltung der Erfindung weist die Aussparung in Verschieberichtung einen zwischen dem ersten Abschnitt und dem zweiten Abschnitt liegenden dritten Abschnitt auf. Das Verhältnis der Stegbreite F zur Tiefe T der Aussparung in Querrichtung im Bereich des dritten Abschnitts beträgt dabei vorzugsweise 1.1 bis 10, insbesondere 2 bis 8. Damit kann ein besonders großer Schmiermittelvorrat bereitgestellt werden. Mittels einer derartigen Schmiermitteltasche kann folglich gewährleistet werden, dass das Schmiermittel für einen besonders langen Zeitraum bevorratet und auf die Kontaktflächen verteilt werden kann. Auch diese "Vorratstasche" wird dabei unmittelbar durch die belasteten Kontaktflächen, nämlich Führungsstege und Führungsnuten, begrenzt.

Der dritte Abschnitt kann dabei beispielsweise mittels Fräsmethoden hergestellt werden, sodass auch diese Ausgestaltung der Erfindung auf besonders einfache Art und Weise herstellbar ist, wobei auch hier lediglich die Führungsstege bearbeitet werden müssen.

Das Verhältnis der Länge L1 des ersten Abschnitts zur Länge L3 des dritten Abschnitts sowie der Länge L2 des zweiten Abschnitts zur Länge L3 des dritten Abschnitts beträgt dabei in Verschieberichtung jeweils 0.3 bis 0.1, insbesondere 0.25 bis 0.15. Damit kann ein ausreichend großer Schmiermittelvorrat bereitgestellt werden, wobei mittels des ersten Abschnitts sowie des zweiten Abschnitts dennoch der Aufbau eines hydrodynamischen Schmierfilms beziehungsweise des Ansatzes eines hydrodynamischen Schmierfilms ermöglicht wird.

Gemäß einer weiteren vorteilhaften Ausgestaltung der Erfindung weist die Backe beziehungsweise die Backenführung beidseits jeweils mehrere, insbesondere drei Führungsstege auf. Die Führungsstege erstrecken sich dabei in Verschieberichtung und sind übereinander angeordnet. Damit kann eine besonders große Auflagefläche beziehungsweise Kontaktfläche bereitgestellt werden und damit eine besonders vorteilhafte Kraftverteilung. Vorzugsweise weist dabei jeder vorhandene Führungssteg einen Aussparungsabschnitt auf, sodass eine besonders vorteilhafte gleichbleibende Schmierung aller Kontaktflächen bereitgestellt werden kann.

Eine Herstellung einer derartigen Spann- oder Greifvorrichtung ist auch auf besonders einfache Art und Weise möglich, da mittels eines Schleif- beziehungsweise daran anschließenden Fräsvorgangs der Aussparungsabschnitt besonders einfach und schnell hergestellt werden kann.

Der Aussparungsabschnitt kann dabei in Verschieberichtung im mittleren Bereich der Backe beziehungsweise der Backenführung angeordnet sein. Dies kann deswegen vorteilhaft sein, da im mittleren Bereich die geringsten Kräfte bzw. Momente, insbesondere Kippmomente vorliegen.

Andererseits ist allerdings auch denkbar, mehrere Aussparungsabschnitte vorzusehen, die jeweils von weiteren Gleitabschnitten voneinander getrennt sind. Mit diesen Maßnahmen kann eine besonders vorteilhafte Schmierung der Kontaktflächen ermöglicht werden. Dabei kann ein Aussparungsabschnitt in Verschieberichtung in der Mitte der Backe beziehungsweise der Backenführung angeordnet sein. Weitere Aussparungsabschnitte können vorteilhafterweise ebenso im mittleren Bereich oder in anderen Ausgestaltungen auch in den Randbereichen angeordnet sein.

Gemäß einer weiteren vorteilhaften Ausgestaltung der Erfindung kann die Aussparung zumindest abschnittsweise von einem schmiermittelabsorbierenden Element ausgefüllt sein oder dieses enthalten. Denkbar ist, dass das schmiermittelabsorbierende Element die Aussparung vollständig ausfüllt. Damit kann Schmiermittel besonders gut und für längere Zeit in der Aussparung gelagert werden und entweder zeit- und/oder belastungsabhängig freigegeben werden. Weiterhin ist denkbar, dass das schmiermittelabsorbierende Element zumindest geringfügig über das freie Ende der Führungsstege hinaussteht und bei einer Relativbewegung der Backen zusammengedrückt wird, wobei Schmiermittel freigegeben wird. Andererseits kann der Aussparungsabschnitt zumindest im die Aussparung umgebenden Bereich aus einem schmiermittelabsorbierenden Werkstoff bestehen oder einen solchen umfassen. Das jeweilige schmiermittelabsorbierende Material kann beispielsweise ein Gewebe, einen Schaumstoff, ein poröses Material oder weitere Materialien mit absorbierenden Eigenschaften enthalten und ist vorzugsweise besonders verschleissfest.

Die Aufgabe wird auch gelöst durch eine Backe mit einem Führungssteg für eine erfindungsgemäße Vorrichtung, wobei die Backe einen Führungssteg aufweist, wobei der Führungssteg einen ersten Gleitabschnitt, einen zweiten Gleitabschnitt sowie einen zwischen den Gleitabschnitten liegenden Aussparungsabschnitt aufweist, wobei der Aussparungsabschnitt eine sich in Verschieberichtung und dazu in Querrichtung erstreckende Aussparung zur Ausbildung eines Schmiermittelreservoirs aufweist, wobei die Aussparung in Verschieberichtung einen ersten Abschnitt und einen zweiten Abschnitt aufweist, wobei die jeweiligen Abschnitte in Querrichtung von einem ersten freien Endseitenabschnitt und einem zweiten freien Endseitenabschnitt des Aussparungsabschnitts begrenzt werden, und wobei die jeweiligen freien Endseitenabschnitte mit der Verschieberichtung jeweils einen Winkel γ zwischen 0.01° und 10° einschließen.

Eine derartige Backe kann insbesondere auch bei bereits vorbekannten Greifvorrichtungen, wie sie beispielsweise aus der EP 1 263 554 B1 bekannt sind, nachgerüstet werden. Dabei muss lediglich die Backe ausgetauscht werden, um eine kontinuierliche Schmierung der Greifvorrichtung bereitzustellen.

Schließlich wird die Aufgabe auch gelöst durch ein Verfahren zur Herstellung einer erfindungsgemäßen Spann- oder Greifvorrichtung. Dabei wird die Aussparung mittels einer Schleifscheibe in den Aussparungsabschnitt eingeschliffen. Ein derartiger Schleifvorgang ist besonders einfach und schnell durchführbar, wobei sich die Kontur der Aussparung durch die entsprechende komplementäre Kontur der Schleifscheibe ergibt. Denkbar ist auch das Einfräsen der Aussparung. In diesem Fall kann ein an der Fräsvorgang anschließender Entgratungsvorgang nötig sein.

Weist die Aussparung der Spann- oder Greifvorrichtung einen dritten Abschnitt auf, so umfasst das erfindungsgemäße Verfahren einen weiteren Schritt, nämlich den des Einfräsens des dritten Abschnitts in den Aussparungsabschnitt mittels eines Fräsbohrers. Folglich erhält der Aussparungsabschnitt zunächst eine erste Kontur. Daraufhin wird in diese Kontur der dritte Abschnitt mittels eines Fräsbohrers eingefräst, sodass ein besonders großes Schmiermittelreservoir bereitgestellt werden kann.

Weitere Einzelheiten und vorteilhafte Ausgestaltungen der Erfindung sind der nachfolgenden Beschreibung zu entnehmen anhand derer Ausführungsbeispiele der Erfindung näher beschrieben und erläutert werden.
- Figur 1:: schematische perspektivische Ansicht eines Parallelgreifers;
- Figur 2:: eine vereinfachte Stirnansicht eines Parallelgreifers, zur Veranschaulichung der Abmessungen, wobei es sich dabei um die Figur 2 der EP 1 263 554 B1 handelt;
- Figur 3:: schematische perspektivische Ansicht einer Backe gemäß einem ersten Ausführungsbeispiel;
- Figur 4:: Draufsicht auf die Backe gemäß Figur 3;
- Figur 5:: vergrößerte Darstellung eines Teils der in Figur 4 gezeigten Darstellung;
- Figur 6:: weitere schematische perspektivische Darstellung der Backe gemäß dem ersten Ausführungsbeispiel;
- Figur 7:: vergrößerte Darstellung eines Ausschnitts der in Figur 6 gezeigten Darstellung;
- Figur 8:: Draufsicht auf eine Backe gemäß einem zweiten Ausführungsbeispiel;
- Figur 9:: schematische perspektivische Ansicht auf die Backe gemäß Figur 8; und
- Figur 10:: vergrößerter Ausschnitt eines Teils der in Figur 9 gezeigten Darstellung.

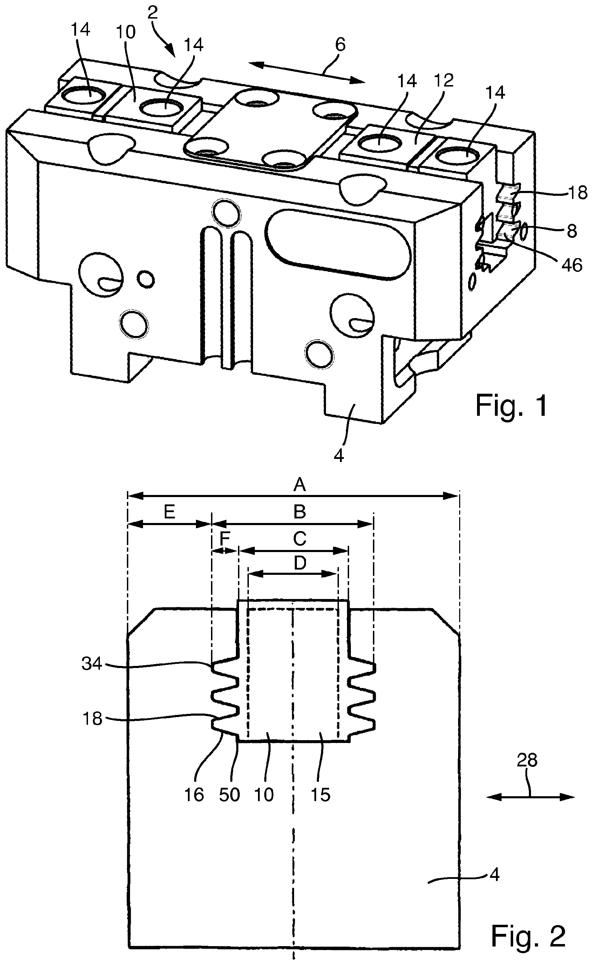

Die Figur 1 zeigt eine insgesamt mit dem Bezugszeichen 2 bezeichnete als Parallelgreifer ausgebildete Greifvorrichtung. Diese umfasst ein Greifergehäuse 4 mit in einer Längsrichtung 6 verlaufenden Backenführung 8 für Greiferbacken 10 und 12, welche in Längsrichtung 6 in die Backenführung 8 einführbar und darin verschieblich gelagert sind. Die Längsrichtung 6 entspricht dabei auch der Verschieberichtung 6. Auf einer Oberseite der Greiferbacken 10, 12 sind Montageöffnungen 14 zum lösbaren Anbringen von Greiferfingerelementen im weitesten Sinne vorgesehen, die hier nicht weiter beschrieben werden sollen. Zum Verstellen der Greiferbacken 10, 12 ist ein bekanntes Keilhakengetriebe vorgesehen, welches hier ebenso nicht weiter beschrieben werden soll.

Wie aus der Figur 1 und besonders deutlich aus der Figur 2 hervorgeht, weisen die Greiferbacken 10, 12 jeweils beidseits sich in Verschieberichtung 6 erstreckende Führungsstege 16 auf, die keil- beziehungsweise trapezförmig mit abgeflachtem freiem Ende 34 ausgebildet sind. Dabei sind bei jeder Greiferbacke 10, 12 beidseits von deren Basiskörper 15 in Querrichtung 28, also quer zur Verschieberichtung 8, vorspringend drei übereinander angeordnete und sich über die gesamte Länge der Greiferbacke 10, 12 erstreckende Führungsstege 16 vorgesehen.

Wie in Figur 2 gezeigt, weist der Basiskörper 15 dabei eine Breite D auf, während die Greiferbacke 10, 12 die Gesamtbreite B aufweist. Die Stegbreite F ist demnach die Erstreckung der Führungsstege 16 vom Steggrund 50 bis zum freien Stegende 34 bzw. die Erstreckung der Führungsstege in Querrichtung über den Basiskörper beziehungsweise über die Seitenflächen der Greiferbacken hinaus. Selbstverständlich ist auch denkbar, dass die Führungsstege eine andere Querschnittsgeometrie aufweisen oder dass auf jeder Seite jeweils nur ein Führungssteg vorgesehen ist. Ein derartiger Führungssteg kann dabei beispielsweise auch eine bogenförmige Außenkontur aufweisen oder auch T-förmig ausgebildet sein.

Wie aus Figur 1 weiter hervorgeht, weist die Backenführung 8 im Greifergehäuse 4 komplementär zu den Führungsstegen 16 ausgebildete keil- beziehungsweise trapezförmige Führungsnuten 18 auf, in welche die Führungsstege 16 eingreifen und darin in Verschieberichtung 6 gleiten können, wobei die Führungsstege 16 im Wesentlichen spielfrei in die Führungsnuten 18 eingreifen, um bei der Aufnahme von Kräften oder Kippmomenten keine Positionsungenauigkeit zu erfahren, sondern die Kräftemomente verkippungsfrei in das Greifergehäuse 4 beziehungsweise auf etwaige vorgesehene Greiferfinger übertragen zu können.

Die Stegbreite F stellt dabei auch eine Führungsbreite zur Aufnahme und Übertragung von Kräften und Momenten dar, wobei durch die Mehrzahl von Führungsstegen 16 auf jeder Seite eine große Führungsbreite bereitgestellt wird.

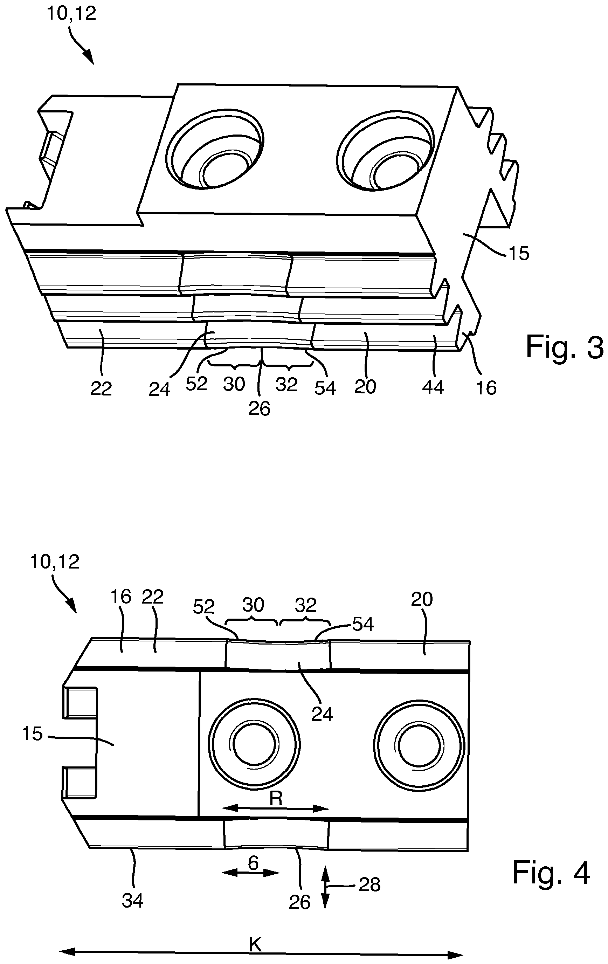

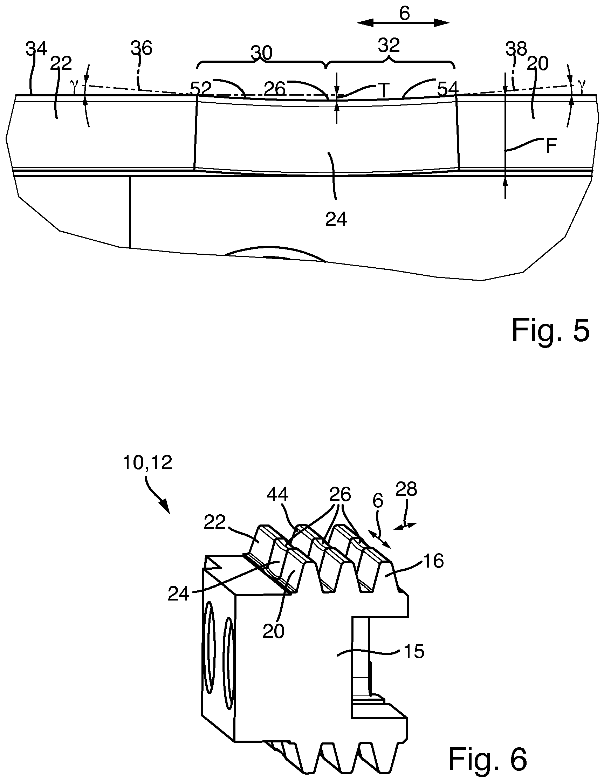

Wie aus dem in den Figuren 3 bis 7 gezeigten ersten Ausführungsbeispiel deutlich hervorgeht, weisen die Führungsstege 16 jeweils einen ersten Gleitabschnitt 20, einen zweiten Gleitabschnitt 22 sowie einen zwischen den Gleitabschnitten 20, 22 liegenden Aussparungsabschnitt 24 auf. Wie in Figur 5 deutlich zu erkennen ist, verlaufen die freien Enden 34 der Gleitabschnitte 20, 22 parallel zur Verschieberichtung 6. Die freien Ende 34 der Gleitabschnitte 20, 22 bilden somit das freie Ende 34 der Führungsstege 16.

Wie weiterhin in Figur 5 gezeigt ist, weist der Aussparungsabschnitt 24 eine sich in Verschieberichtung 6 und dazu in Querrichtung 28 erstreckende Aussparung 26 zur Ausbildung eines Schmiermittelreservoirs auf. Die Aussparung 26 weist dabei in Verschieberichtung 6 einen ersten Abschnitt 30 sowie einen zweiten Abschnitt 32 auf, was in den Figuren 3 und 5 besonders deutlich zu erkennen ist. Die Abschnitte 30, 32 umfassen jeweils die Hälfte der Erstreckung der Aussparung 26 in Verschieberichtung 6. Die Aussparung 26 weist eine maximale Tiefe T in Querrichtung 28 auf, die wesentlich kleiner ist als die Stegbreite F.

Wie aus Figur 4 hervorgeht, liegt das Verhältnis der Länge K der Führungsstege 16 zur Länge R des Aussparungsabschnitts 24 in Verschieberichtung 6 bei ca. 4.
Wie in Figur 5 gezeigt ist, werden der erste Abschnitt 30 sowie der zweite Abschnitt 32 der Aussparung 26 in Querrichtung von einem ersten freien Endseitenabschnitt 52 und einem zweiten freien Endseitenabschnitt 54 des Aussparungsabschnitts 24 begrenzt.

Wie in Figur 5 weiter gezeigt ist, schließen der erste freie Endseitenabschnitt 52 sowie der zweite freie Endseitenabschnitt 54 mit der Verschieberichtung 6 jeweils einen Winkel γ von ca. 3° ein. Die Abschnitte 30, 32 weisen dabei eine bogenförmige Kontur auf. Zur Ermittlung des vom ersten sowie zweiten Abschnitts mit der Verschieberichtung eingeschlossenen Winkels γ wird jeweils eine Regressionsgerade 36, 38 durch die bogenförmig verlaufenden freie Endseitenabschnitte 52, 54 hindurchgelegt.

Die Aussparung 26 dient zur Ausbildung eines Schmiermittelreservoirs. Dieses Reservoir wird begrenzt durch die Greiferbacken 10, 12 einerseits sowie die Backenführung 8 andererseits. Die Aussparung 26 ist mit Schmiermittel befüllbar. Dabei kann es sich um Schmieröl oder auch Schmierfett handeln. Werden die Greiferbacken 10, 12 in Verschieberichtung bewegt, so wird das Schmiermittel zwischen die Führungsstege 16 und die Führungsnuten 18 gedrängt. Aufgrund der Außenkontur des Aussparungsabschnitts 24 bildet die Aussparung 26 einen sich verengenden Schmierspalt aus. Durch eine Relativbewegung der Greiferbacken 10, 12 zur Backenführung 8 wird Schmiermittel in den sich verengenden Schmierspalt gefördert, wobei der Druck im Schmiermittel idealerweise so hoch ist, dass die Kontaktflächen, also die Führungsstege beziehungsweise die Führungsnuten voneinander abgehoben werden. Es kann folglich eine hydrodynamische Schmierung oder zumindest ein Ansatz einer hydrodynamischen Schmierung bereitgestellt werden. Dabei wird das Schmiermittel nicht nur im Bereich des freien Endes der Führungsstege 16 verteilt, sondern auch auf die Flanken 44 der Führungsstege 16 beziehungsweise der Führungsnuten 18, sodass Schmiermittel auf alle Kontaktflächen geleitet werden kann.

Zur Herstellung des Aussparungsabschnitts 24 kann eine Schleifscheibe verwendet werden. Dabei wird die komplementäre Kontur der Schleifscheibe zur Bildung der Aussparung 26 in den Aussparungsabschnitt 26 eingeschliffen. Dabei kann mittels lediglich eines Schleifvorgangs die Aussparung 26 aller Führungsstege 16 bereitgestellt werden.

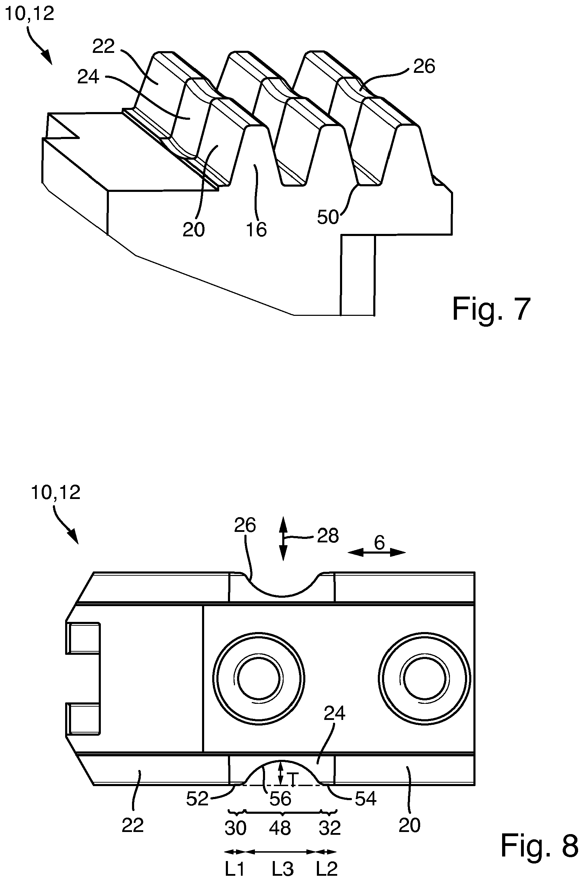

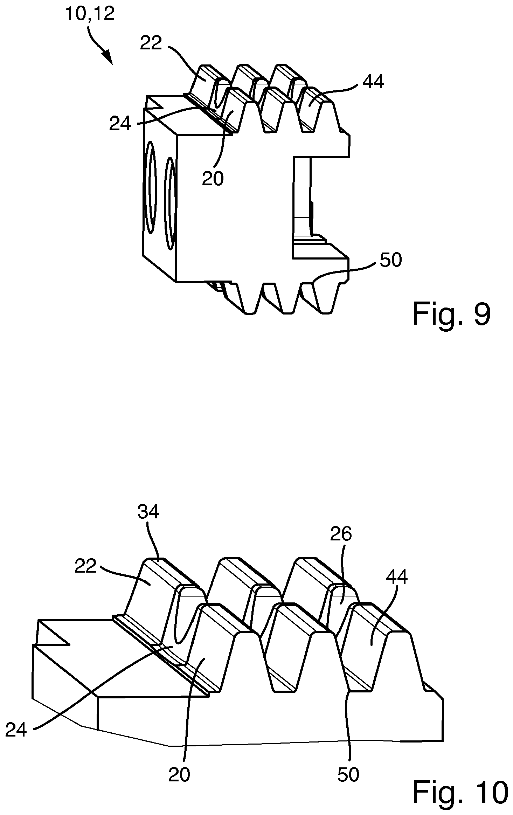

Die Figuren 8 bis 10 zeigen ein zweites Ausführungsbeispiel. Die Bezugszeichen in diesem Ausführungsbeispiel entsprechen den Bezugszeichen des in den Figuren 3 bis 7 gezeigten ersten Ausführungsbeispiels.

Im Unterschied zum ersten Ausführungsbeispiel weist die Aussparung 26 in Verschieberichtung 6 einen dritten Abschnitt 48 auf. Wie aus der Figur 8 besonders deutlich hervorgeht, ist die Tiefe T der Aussparung 26 in Querrichtung 28 im Bereich des dritten Abschnitts 48 deutlich größer als die Tiefe T der Aussparung im Bereich des ersten beziehungsweise des zweiten Abschnitts 30, 32. Der dritte Abschnitt 48 wird in Querrichtung von einem dritten, bogenförmig verlaufenden freien Endseitenabschnitt 56 des Aussparungsabschnitts 24 begrenzt. Damit kann ein besonders großes Schmiermittelreservoir bereitgestellt werden.

Dabei liegt das Verhältnis der Länge L1 des ersten Abschnitts zur Länge L3 des dritten Abschnitts in Verschieberichtung bei etwa 0,15. Dasselbe trifft auf das Verhältnis des zweiten Abschnitts L2 zum dritten Abschnitt L3 zu.

Ausgehend von der Mitte des Aussparungsabschnitts 24 verjüngt sich die Aussparung dabei ebenso wie im ersten Ausführungsbeispiel bis zum Übergang in die Gleitabschnitte 20 beziehungsweise 22 kontinuierlich, sodass die Aussparung 26 einen sich verjüngenden Schmierspalt darstellt.

Zur Einbringung des dritten Abschnitts 48 wird die Greiferbacke 10, 12, welche in den Figuren 3 bis 7 gezeigt ist, zusätzlich nach dem Schleifvorgang noch mit einem Fräsbohrer bearbeitet, sodass in den Aussparungsabschnitt 24 mittels des Fräswerkzeugs noch der dritte Abschnitt 48 eingefräst wird. Dabei kann mittels lediglich eines Schleifsowie eines Fräsvorgangs die Aussparung 26 aller übereinander liegender Führungsstege 16 bereitgestellt werden.

## Patentansprüche

1. Spann- oder Greifvorrichtung (2), mit wenigstens einer in einer Backenführung (8) verschiebbar geführten Backe (10,12), wobei die Backe (10,12) bzw. die Backenführung (8) beidseits jeweils wenigstens einen sich in Verschieberichtung (6) erstreckenden Führungssteg (16) aufweist, wobei die Backenführung (8) bzw. die Backe (10,12) mit den Führungsstegen (16) zusammenwirkende Führungsnuten aufweisen, wobei wenigstens ein Führungssteg (16) einen ersten Gleitabschnitt (20), einen zweiten Gleitabschnitt (22) sowie einen zwischen den Gleitabschnitten (20, 22) liegenden Aussparungsabschnitt (24) aufweist, und wobei der Aussparungsabschnitt (24) eine sich in Verschieberichtung (6) und dazu in Querrichtung (28) erstreckende Aussparung (26) zur Ausbildung eines Schmiermittelreservoirs aufweist, **dadurch gekennzeichnet, dass** die Aussparung (26) einen ersten Abschnitt (30) und einen zweiten Abschnitt (32) aufweist, wobei die jeweiligen Abschnitte (30, 32) in Querrichtung (28) von einem ersten freien Endseitenabschnitt (52) und einem zweiten freien Endseitenabschnitt (54) des Aussparungsabschnitts (24) begrenzt werden, und wobei die jeweiligen freien Endseitenabschnitte (52, 54) mit der Verschieberichtung (6) jeweils einen Winkel γ zwischen 0.01° und 10°, insbesondere zwischen 1° und 3°, einschließen.

2. Spann- oder Greifvorrichtung (2) nach Anspruch 1, **dadurch gekennzeichnet, dass** die Führungsstege (26) eine Stegbreite F aufweisen, wobei sich die Stegbreite F vom Steggrund (50) in Querrichtung (28) bis zum freien Stegende (34) erstreckt, und wobei das Verhältnis der Stegbreite F zur Tiefe T der Aussparung (26) in Querrichtung (28) 10 bis 60, insbesondere 30 bis 50, weiter insbesondere 35 bis 45, beträgt.

3. Spann- oder Greifvorrichtung (2) nach Anspruch 1, **dadurch gekennzeichnet, dass** die Aussparung (26) in Verschieberichtung (6) einen zwischen dem ersten Abschnitt (30) und dem zweiten Abschnitt (32) liegenden dritten Abschnitt (48) aufweist, wobei das Verhältnis der Stegbreite F zur Tiefe T der Aussparung (26) in Querrichtung (28) im Bereich des dritten Abschnitts (48) 1 bis 10, insbesondere 2 bis 8, beträgt.

4. Spann- oder Greifvorrichtung (2) nach Anspruch 3, **dadurch gekennzeichnet, dass** das Verhältnis der Länge L1 des ersten Abschnitts (30) und der Länge L2 des zweiten Abschnitts (32) zur Länge L3 des dritten Abschnitts (48) in Verschieberichtung (6) jeweils 0.3 bis 0.1, insbesondere 0.25 bis 0.15, beträgt.

5. Spann- oder Greifvorrichtung (2) nach einem der vorhergehenden Ansprüche, **dadurch gekennzeichnet, dass** die Backe (10,12) bzw. die Backenführung (8) beidseits jeweils mehrere, insbesondere drei, Führungsstege (16) aufweist.

6. Spann- oder Greifvorrichtung (2) nach einem der vorhergehenden Ansprüche, **dadurch gekennzeichnet, dass** der Aussparungsabschnitt (24) in Verschieberichtung (6) im mittleren Bereich der Backe (10,12) bzw. der Backenführung (8) angeordnet ist.

7. Spann- oder Greifvorrichtung (2) nach einem der vorhergehenden Ansprüche, **dadurch gekennzeichnet, dass** das Verhältnis der Länge K der Führungsstege (16) zur Länge R des Aussparungsabschnitts (24) in Verschieberichtung (6) 1 bis 9, insbesondere 2 bis 7, beträgt.

8. Spann- oder Greifvorrichtung (2) nach einem der vorhergehenden Ansprüche, **dadurch gekennzeichnet, dass** die Aussparung (26) zumindest abschnittsweise von einem schmiermittelabsorbierenden Element ausgefüllt ist oder dass der Aussparungsabschnitt (24) zumindest im die Aussparung (26) umgebenden Bereich aus einem schmiermittelabsorbierenden Werkstoff besteht oder einen solchen umfasst.

9. Backe (10,12) für eine Greifvorrichtung (2) nach einem der vorhergehenden Ansprüche, wobei die Backe (10,12) beidseits jeweils wenigstens einen sich in Verschieberichtung (6) erstreckenden Führungssteg (16) aufweist, **dadurch gekennzeichnet, dass** der wenigstens eine Führungssteg (16) einen ersten Gleitabschnitt (20), einen zweiten Gleitabschnitt (22) sowie einen zwischen den Gleitabschnitten (20, 22) liegenden Aussparungsabschnitt (24) aufweist, wobei der Aussparungsabschnitt (24) eine sich in Verschieberichtung (6) und dazu in Querrichtung (28) erstreckende Aussparung (26) zur Ausbildung eines Schmiermittelreservoirs aufweist, wobei die Aussparung (26) einen ersten Abschnitt (30) und einen zweiten Abschnitt (32) aufweist, wobei die jeweiligen Abschnitte (30,32) in Querrichtung (28) von einem ersten freien Endseitenabschnitt (52) und einem zweiten freien Endseitenabschnitt (54) des Aussparungsabschnitts (24) begrenzt werden, und wobei die jeweiligen Endseitenabschnitte (52,54) mit der Verschieberichtung (6) jeweils einen Winkel γ zwischen 0.01° und 10°, insbesondere zwischen 1° und 3°, einschließen.

10. Verfahren zur Herstellung einer Spann- oder Greifvorrichtung (2) nach einem der Ansprüche 1, 2 und 5 bis 8, **dadurch gekennzeichnet, dass** die Aussparung (26) mittels einer Schleifscheibe eingeschliffen wird oder mittels eines Fräsbohrers eingebohrt wird.

11. Verfahren zur Herstellung einer Spann- oder Greifvorrichtung (2) nach einem der Ansprüche 3 bis 8, umfassend die folgenden Schritte:
1. Einfräsen des dritten Abschnitts (48) mittels eines Fräsbohrers;
2. Schleifen des Aussparungsabschnitts (26) mittels einer Schleifscheibe zur Herstellung des ersten Abschnitts (30) und des zweiten Abschnitts (32).

## Claims

1. Clamping or gripping device (2) with at least one jaw (10, 12) that can be adjusted in a jaw track (8), whereby the jaw (10, 12) and jaw track (8) respectively exhibit at least one track support (16) extending out in the direction of adjustment (6), whereby the jaw track (8) and jaw (10, 12) respectively exhibit track supports (16) that work with the track grooves, whereby at least one track support (16) exhibits a primary slide section (20), a secondary slide section (22) and a recess section (24) between the slide sections (20, 22), and whereby the recess section (24) exhibits a recess (26) in the direction of adjustment (6) and cross-wise (28) to create a lubricant reservoir, distinguished by the fact that the recess (26) exhibits a primary section (30) and a secondary section (32), whereby the respective sections (30, 32) are bordered cross-wise (28) by a primary, free end section (52) and a secondary, free end section (54) of the recess section (24), and whereby the respective free end sections (52, 54), with the direction of adjustment (6), each include an angle γ between 0.01° and 10°, but specifically between 1° and 3°.

2. Clamping or gripping device (2) as per claim 1, distinguished by the fact that the track supports (16) exhibit a support width F, whereby support width F extends from the support base (50) cross-wise (28) toward the free support end (34), and whereby the cross-wise (28) ratio of support width F to recess (26) depth T is 10 to 60, specifically 30 to 50, and more specifically 35 to 45.

3. Clamping or gripping device (2) as per claim 1, distinguished by the fact that the recess (26) in the direction of adjustment (6) exhibits a third section (48) between the first section (30) and the second section (32), whereby the cross-wise (28) ratio of support width F to depth T of the recess (26) in the area of the third section (48) is one to 10, specifically 2 to 8.

4. Clamping or gripping device (2) as per claim 3, distinguished by the fact that the ratio of length L1 of the first section (30) and length L2 of the second section (32) to length L3 of the third section (48) in the direction of adjustment (6) is 0.3 to 0.1, specifically 0.25 to 0.15, respectively.

5. Clamping or gripping device (2) as per one of the preceding claims, distinguished by the fact that the jaw (10, 12) and jaw track (8) respectively exhibit multiple, specifically three, track supports (16).

6. Clamping or gripping device (2) as per one of the preceding claims, distinguished by the fact that the recess section (24) is aligned in the direction of adjustment (6) in the middle section of the jaw (10, 12) and jaw track (8), respectively.

7. Clamping or gripping device (2) as per one of the preceding claims, distinguished by the fact that the ratio of length K of the support tracks (16) to length R of the recess section (24) in the direction of adjustment (6) is 1 to 9, specifically 2 to 7.

8. Clamping or gripping device (2) as per one of the preceding claims, distinguished by the fact that the recess (26) is, at least in some sections, filled with a lubricant-absorbing element or that the recess section (24), at least in the area around the recess (26), consists of a lubricant-absorbing substance or contains such a substance.

9. Jaw (10, 12) for a gripping device (2) as per one of the preceding claims, whereby the jaw (10, 12) exhibits a support track (16) extending in the direction of adjustment (6) on both sides, distinguished by the fact that at least one support track (16) exhibits a primary slide section (20), a secondary slide section (22), and a recess section (24) between the slide sections (20, 22), whereby the recess section (24) exhibits a recess (26) both cross-wise (28) and in the direction of adjustment (6) for a lubricant reservoir, whereby the recess (26) exhibits a primary section (30) and a secondary section (32), whereby the respective sections (30, 32) are bordered cross-wise (28) by a primary, free end section (52) and a secondary, free end section (54) of the recess section (24), whereby the respective end sections (52, 54), with the direction of adjustment (6), each include an angle γ between 0.01° and 10°, specifically between 1° and 3°.

10. Process for manufacturing a clamping or gripping device (2) as per one of claims 1, 2, and 5 to 8, distinguished by the fact that the recess (26) is ground in by a grinding disk or a milling drill.

11. Process for manufacturing a clamping or gripping device (2) as per one of claims 3 to 8, including the following steps.
1. Shaping of the third section (48) with a milling drill;
2. Grinding of the recess section (26) with a grinding disk to create the primary section (30) and the secondary section (32).

## Revendications

1. Dispositif de serrage ou de préhension (2) comprenant au moins une mâchoire (10, 12) guidée de manière à pouvoir coulisser dans un guide de mâchoire (8), dans lequel la mâchoire (10, 12) ou bien le guide de mâchoire (8) présente de part et d'autre respectivement au moins une nervure de guidage (16) s'étendant dans la direction de déplacement (6), dans lequel ledit guide de mâchoire (8) ou bien la mâchoire (10, 12) présentent des rainures de guidage coopérant avec les nervures de guidage (16), dans lequel au moins une nervure de guidage (16) présente une première section de glissement (20), une deuxième section de glissement (22) ainsi qu'une section à évidement (24) située entre les sections de glissement (20, 22), et dans lequel ladite section à évidement (24) comprend un évidement (26) s'étendant dans la direction de déplacement (6) et dans la direction transversale (28) par rapport à cette dernière et destiné à réaliser un réservoir de lubrifiant, **caractérisé par le fait que** ledit évidement (26) présente une première section (30) et une deuxième section (32), les sections (30, 32) respectives étant délimitées dans la direction transversale (28) par une première section latérale d'extrémité (52) libre et par une deuxième section latérale d'extrémité (54) libre de la section à évidement (24), et les sections latérales d'extrémité (52, 54) libres respectives faisant chacune un angle γ compris entre 0,01° et 10°, en particulier entre 1 ° et 3°, avec la direction de déplacement (6).

2. Dispositif de serrage ou de préhension (2) selon la revendication 1, **caractérisé par le fait que** les nervures de guidage (26) présentent une largeur de nervure F, dans lequel la largeur de nervure F s'étend depuis le fond de nervure (50) dans la direction transversale (28) jusqu'à l'extrémité libre de nervure (34), et dans lequel le rapport de la largeur de nervure F à la profondeur T de l'évidement (26) dans la direction transversale (28) est de 10 à 60, en particulier de 30 à 50, encore en particulier de 35 à 45.

3. Dispositif de serrage ou de préhension (2) selon la revendication 1, **caractérisé par le fait que** ledit évidement (26) présente, dans la direction de déplacement (6), une troisième section (48) située entre la première section (30) et la deuxième section (32), dans lequel le rapport de la largeur de nervure F à la profondeur T de l'évidement (26) dans la direction transversale (28), au niveau de la troisième section (48), est de 1 à 10, en particulier de 2 à 8.

4. Dispositif de serrage ou de préhension (2) selon la revendication 3, **caractérisé par le fait que** le rapport de la longueur L1 de la première section (30) et de la longueur L2 de la deuxième section (32) à la longueur L3 de la troisième section (48) dans la direction de déplacement (6) est respectivement de 0.3 à 0.1, en particulier de 0.25 à 0.15.

5. Dispositif de serrage ou de préhension (2) selon l'une quelconque des revendications précédentes, **caractérisé par le fait que** la mâchoire (10, 12) ou bien le guide de mâchoire (8) présente de part et d'autre respectivement plusieurs, en particulier trois nervures de guidage (16).

6. Dispositif de serrage ou de préhension (2) selon l'une quelconque des revendications précédentes, **caractérisé par le fait que** ladite section à évidement (24) est disposée, dans la direction de déplacement (6), dans la zone centrale de la mâchoire (10, 12) ou bien du guide de mâchoire (8).

7. Dispositif de serrage ou de préhension (2) selon l'une quelconque des revendications précédentes, **caractérisé par le fait que** le rapport de la longueur K des nervures de guidage (16) à la longueur R de la section à évidement (24) dans la direction de déplacement (6) est de 1 à 9, en particulier de 2 à 7.

8. Dispositif de serrage ou de préhension (2) selon l'une quelconque des revendications précédentes, **caractérisé par le fait que** ledit évidement (26) est rempli, au moins par sections, d'un élément absorbant le lubrifiant, ou que la section à évidement (24), au moins dans la zone entourant l'évidement (26), se compose d'un matériau absorbant le lubrifiant ou comprend un tel matériau.

9. Mâchoire (10, 12) pour un dispositif de préhension (2) selon l'une quelconque des revendications précédentes, dans laquelle la mâchoire (10, 12) présente de part et d'autre respectivement au moins une nervure de guidage (16) s'étendant dans la direction de déplacement (6), **caractérisée par le fait que** ladite au moins une nervure de guidage (16) présente une première section de glissement (20), une deuxième section de glissement (22) ainsi qu'une section à évidement (24) située entre les sections de glissement (20, 22), dans laquelle ladite section à évidement (24) comprend un évidement (26) s'étendant dans la direction de déplacement (6) et dans la direction transversale (28) par rapport à cette dernière et destiné à réaliser un réservoir de lubrifiant, dans laquelle ledit évidement (26) présente une première section (30) et une deuxième section (32), les sections (30, 32) respectives étant délimitées dans la direction transversale (28) par une première section latérale d'extrémité (52) libre et par une deuxième section latérale d'extrémité (54) libre de la section à évidement (24), et les sections latérales d'extrémité (52, 54) respectives faisant chacune un angle γ compris entre 0,01° et 10°, en particulier entre 1° et 3°, avec la direction de déplacement (6).

10. Procédé de fabrication d'un dispositif de serrage ou de préhension (2) selon l'une quelconque des revendications 1, 2 et 5 à 8, **caractérisé par le fait que** ledit évidement (26) est réalisé par meulage au moyen d'une meule ou est creusé au moyen d'un foret à fraiser.

11. Procédé de fabrication d'un dispositif de serrage ou de préhension (2) selon l'une quelconque des revendications 3 à 8, comprenant les étapes suivantes consistant à:
1. fraiser la troisième section (48) au moyen d'un foret à fraiser;
2. meuler la section à évidement (26) au moyen d'une meule pour réaliser la première section (30) et la deuxième section (32).
